# EUROPEAN PATENT APPLICATION

(11) **EP 4 806 963 A1**
(43) Date of publication of application: **16.09.2026**
(21) Application number: 24888642.6
(22) Date of filing: 01.11.2024
(51) Int. Cl.: C09D 143/04, C09D 5/16, C09D 7/63, C09D 193/04

(54) **ANTIFOULING COATING COMPOSITION**

(30) Priority: 06.11.2023 JP 2023189334
(71) Applicant: Nitto Kasei Co., Ltd., Osaka-shi Osaka 533-0031 (JP)
(72) Inventor: GOSHIMA, Gakuto, Osaka-shi, Osaka 533-0031 (JP); MITOMI, Daisuke, Osaka-shi, Osaka 533-0031 (JP)
(74) Representative: Gulde & Partner
(86) International application number: PCT/JP2024/039030
(87) International publication number: WO 2025/100345

(57) **Abstract**

To provide a composition for forming a highly glossy coating film which exhibits good antifouling performance despite a relatively slow coating film dissolution rate, and does not cause coating film abnormalities such as cracks even after being immersed in seawater for a long period of time. According to the present invention, there is provided an antifouling coating composition comprising a copolymer A, a rosin ester B, and an antifouling agent C, wherein the copolymer A is a copolymer of a monomer (a1) and an ethylenically unsaturated monomer (a2) other than the monomer (a1), the monomer (a1) is represented by the general formula (1), and the rosin ester B is a reaction product of a polyhydric alcohol (b1) and rosin or a derivative thereof (b2).

## Description

### [Technical Field]

The present invention relates to an antifouling coating composition.

### [Background Art]

There are problems in that aquatic fouling organisms such as barnacles, serpula, blue mussels, bryozoans, ascidians, green algae, sea lettuce, and slime attach to ships (especially ship bottom parts), fishing gear such as fishing nets and fishing net accessories, and underwater structures such as power plant aqueducts, thereby impairing the functions of these ships and the like, and deteriorating their appearance. In order to prevent such problems, a technique is known in which an antifouling coating composition is applied to a ship or the like to form an antifouling coating film, and an antifouling agent is sustainedly released from the antifouling coating film, thereby exhibiting antifouling performance over a long period of time (PTL 1).

### [Citation List]

### [Patent Literature]

[PTL 1] JP 2000-17203 A

### [Summary of Invention]

### [Technical Problem]

However, even if the technique of PTL 1 is adopted, initial coating film dissolution may become excessively large, or coating film abnormalities such as cracks may occur after a relatively short period of time, and further improvement is demanded.

In addition, the coating film using the technique of PTL 1 tends to have low gloss, and a highly glossy coating film surface may be required in order to improve the aesthetic appearance in shipbuilding.

The present invention has been made in view of such circumstances, and provides a composition for forming a highly glossy coating film that exhibits good antifouling performance despite a relatively slow coating film dissolution rate, and does not cause coating film abnormalities such as cracks even after being immersed in seawater for a long period of time.

### [Solution to Problem]

According to the present invention, there is provided an antifouling coating composition comprising a copolymer A, a rosin ester B, and an antifouling agent C, wherein the copolymer A is a copolymer of a monomer (a1) and an ethylenically unsaturated monomer (a2) other than the monomer (a1), the monomer (a1) is represented by the general formula (1), and the rosin ester B is a reaction product of a polyhydric alcohol (b1) and rosin or a derivative thereof (b2).

As a result of intensive studies to solve the above problems, the present inventors have found that the above composition can solve the problems, and have completed the present invention.

### [Description of Embodiments]

Details of the present invention will be described below. In the present specification, "(meth)acryl" means acryl or methacryl.

### 1. Antifouling coating composition

The antifouling coating composition of the present invention includes a copolymer A, a rosin ester B, and an antifouling agent C.

### 1-1. Copolymer A

### 1-1-1. Composition of Copolymer A

The copolymer A is a copolymer of a monomer (a1) and a polymerizable unsaturated monomer (a2) other than the monomer (a1). The copolymer A contains monomer units derived from the monomers (a1) and (a2).

### <Monomer (al)>

The monomer (a1) is a triorganosilyl (meth)acrylate monomer and is represented by the general formula (1).

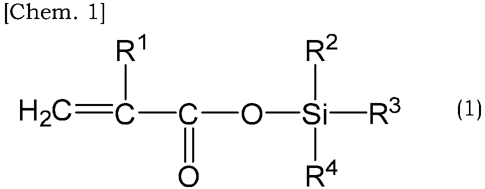

In the formula, R¹ represents a hydrogen atom or a methyl group, and R² to R⁴ are the same or different and each represents a branched alkyl group having 3 to 8 carbon atoms or a phenyl group.

Examples of the branched alkyl group having 3 to 8 carbon atoms for R² to R⁴ include isopropyl, isobutyl, s-butyl, t-butyl, 1-ethylpropyl, 1-methylbutyl, 1-methylpentyl, 1,1-dimethylpropyl, 1,1-dimethylbutyl, thexyl, cyclohexyl, 1,1-dimethylpentyl, 1-methylhexyl, 1,1-dimethylhexyl, 1-methylheptyl, 2-methylbutyl, 2-ethylbutyl, 2,2-dimethylpropyl, cyclohexylmethyl, 2-ethylhexyl, 2-propylpentyl, and 3-methylpentyl. Preferred as R² to R⁴ are isopropyl, s-butyl, t-butyl, phenyl, and 2-ethylhexyl. Particularly preferred are isopropyl and 2-ethylhexyl.

Examples of the monomer (a1) include silyl (meth)acrylates such as triisopropylsilyl (meth)acrylate, triisobutylsilyl (meth)acrylate, tri-s-butylsilyl (meth)acrylate, triisopentylsilyl (meth)acrylate, triphenylsilyl (meth)acrylate, diisopropylphenylsilyl (meth)acrylate, diisopropylisobutylsilyl (meth)acrylate, diisopropyl-s-butylsilyl (meth)acrylate, diisopropylisopentylsilyl (meth)acrylate, isopropyldiisobutylsilyl (meth)acrylate, isopropyldi-s-butylsilyl (meth)acrylate, t-butyldiisobutylsilyl (meth)acrylate, t-butyldiisopentylsilyl (meth)acrylate, t-butyldiphenylsilyl (meth)acrylate, diisopropylthexylsilyl (meth)acrylate, diisopropylcyclohexylsilyl (meth)acrylate, tricyclohexylsilyl (meth)acrylate, tri-1,1-dimethylpentylsilyl (meth)acrylate, tri-2,2-dimethylpropylsilyl (meth)acrylate, tricyclohexylmethylsilyl (meth)acrylate, diisopropylcyclohexylmethylsilyl (meth)acrylate, tri-2-ethylhexylsilyl (meth)acrylate, and tri-2-propylpentylsilyl (meth)acrylate. These monomers (a1) can be used alone or in combination of two or more.

### <Monomer (a2)>

The monomer (a2) is an ethylenically unsaturated monomer other than the monomer (a1), and examples thereof include (meth)acrylates, vinyl compounds, aromatic compounds, and dialkyl ester compounds of dibasic acids.

Examples of the (meth)acrylates include acrylates such as methyl (meth)acrylate, ethyl (meth)acrylate, butyl (meth)acrylate, isobutyl (meth)acrylate, t-butyl (meth)acrylate, 2-ethylhexyl (meth)acrylate, lauryl (meth)acrylate, 2-methoxyethyl (meth)acrylate, 2-methoxypropyl (meth)acrylate, 4-methoxybutyl (meth)acrylate, benzyl (meth)acrylate, phenyl (meth)acrylate, 2-ethoxyethyl (meth)acrylate, propylene glycol monomethyl (meth)acrylate, 2-hydroxyethyl (meth)acrylate, 2-hydroxypropyl (meth)acrylate, glycidyl (meth)acrylate, furfuryl (meth)acrylate, tetrahydrofurfuryl (meth)acrylate, dimethylaminoethyl (meth)acrylate, diethylaminoethyl (meth)acrylate, 2-[2-(2-hydroxyethoxy)ethoxy] ethyl methacrylate, mono(2-(meth)acryloyloxyethyl) succinate, N-(3-dimethylaminopropyl)(meth)acrylamide, 2-[2-(2-methoxyethoxy)ethoxy]ethyl (meth)acrylate, N,N'-dimethyl(meth)acrylamide, 2-(2-methoxyethoxy)ethyl (meth)acrylate, (meth)acrylic acid, hydroxypropyl acrylate, 2-(acetoacetyloxy)ethyl methacrylate, 2-(2-hydroxyethoxy)ethyl methacrylate, N-vinyl-2-pyrrolidone, 2-[2-(2-ethoxyethoxy)ethoxy]ethyl acrylate, 4-hydroxybutyl acrylate glycidyl ether, N-isopropylacrylamide, 2-(dimethylamino)ethyl acrylate, 2-(2-ethoxyethoxy)ethyl acrylate, 4-hydroxybutyl acrylate, tetrahydrofurfuryl acrylate, 3-chloro-2-hydroxypropyl acrylate, 2-[2-(2-ethoxyethoxy)ethoxy]ethyl methacrylate, N,N'-diethylacrylamide, and 3-methoxybutyl acrylate, and the like.

Examples of the vinyl compounds include vinyl compounds having a functional group such as vinyl chloride, vinylidene chloride, acrylonitrile, methacrylonitrile, vinyl acetate, vinyl benzoate, vinyl butyrate, butyl vinyl ether, lauryl vinyl ether, and N-vinylpyrrolidone.

Examples of the aromatic compounds include styrene, vinyltoluene, and α-methylstyrene.

Examples of the dialkyl ester compounds of dibasic acids include dimethyl maleate, dibutyl maleate, and dimethyl fumarate.

In the present invention, these monomers (a2) can be used alone or in combination of two or more. In particular, the monomer (a2) is preferably a (meth)acrylate from the viewpoint of coating film physical properties, and more preferably methyl methacrylate, butyl (meth)acrylate, isobutyl (meth)acrylate, t-butyl (meth)acrylate, 2-ethylhexyl (meth)acrylate, 2-methoxyethyl (meth)acrylate, 2-ethoxyethyl (meth)acrylate, 2-hydroxyethyl (meth)acrylate, glycidyl (meth)acrylate, furfuryl (meth)acrylate, or tetrahydrofurfuryl (meth)acrylate, from the viewpoint of crack resistance.

The content of the monomer (a1) in the copolymer A is preferably 25 to 75% by mass, and more preferably 30 to 60% by mass.

Specifically, the content of the monomer (a1) is preferably, for example, 25, 30, 35, 40, 45, 50, 55, 60, 65, 70, or 75% by mass, and may be within a range between any two of the values exemplified here.

### 1-1-2. Physical Properties and Production Method of Copolymer A

The weight average molecular weight (Mw) of the copolymer A is desirably 5,000 to 100,000. This is because if the molecular weight is less than 5,000, the coating film of the antifouling coating composition becomes fragile and is liable to peel off or crack, and if it exceeds 100,000, the viscosity of the polymer solution increases, making handling difficult. Specifically, this Mw is, for example, 5,000, 10,000, 20,000, 25,000, 30,000, 40,000, 50,000, 60,000, 70,000, 80,000, 90,000, or 100,000, and may be within a range between any two of the values exemplified here.

Examples of the method for measuring Mw include gel permeation chromatography (GPC method).

The copolymer A may be any of a random copolymer, an alternating copolymer, a periodic copolymer, and a block copolymer of the monomer (a1) and the monomer (a2).

The copolymer A can be obtained, for example, by polymerizing the monomer (a1) and the monomer (a2) in the presence of a polymerization initiator.

Examples of the polymerization initiator include azo compounds such as 2,2'-azobisisobutyronitrile, 2,2'-azobis(2-methylbutyronitrile), 2,2'-azobis(2,4-dimethylvaleronitrile), dimethyl 2,2'-azobisisobutyrate, and 2,2'-azobis(N-butyl-2-methylpropionamide); and peroxides such as benzoyl peroxide, di-tert-butyl peroxide, tert-butyl peroxybenzoate, tert-butyl peroxyisopropyl carbonate, t-butyl peroxy-2-ethylhexanoate, t-hexyl peroxy-2-ethylhexanoate, di-t-hexyl peroxide, t-butyl peroxy-2-ethylhexyl monocarbonate, di-t-butyl peroxide, 1,1,3,3-tetramethylbutyl peroxyneodecanoate, t-amyl peroxyneodecanoate, t-hexyl peroxypivalate, t-amyl peroxypivalate, and 1,1,3,3-tetramethylbutyl peroxy-2-ethylhexanoate. These polymerization initiators can be used alone or in combination of two or more. As the polymerization initiator, 2,2'-azobisisobutyronitrile, 2,2'-azobis(2-methylbutyronitrile), 2,2'-azobis(2,4-dimethylvaleronitrile), dimethyl 2,2'-azobisisobutyrate, and 1,1,3,3-tetramethylbutyl peroxy-2-ethylhexanoate are particularly preferable. By appropriately setting the usage amount of the polymerization initiator, the molecular weight of the copolymer A can be adjusted.

Examples of the polymerization method include solution polymerization, bulk polymerization, emulsion polymerization, suspension polymerization, and non-aqueous dispersion polymerization. Among these, solution polymerization or non-aqueous dispersion polymerization is preferable because the copolymer A can be obtained simply and highly accurately.

In the polymerization reaction, an organic solvent may be used as necessary. The organic solvent is not particularly limited, and examples thereof include aromatic hydrocarbon solvents such as xylene and toluene; aliphatic hydrocarbon solvents; ester solvents such as ethyl acetate, butyl acetate, isobutyl acetate, methoxypropyl acetate, and propylene glycol 1-monomethyl ether 2-acetate; alcohol solvents such as isopropyl alcohol, butyl alcohol, and propylene glycol monomethyl ether; ether solvents such as dioxane, diethyl ether, and dibutyl ether; and ketone solvents such as methyl ethyl ketone and methyl isobutyl ketone.

Among them, butyl acetate, isobutyl acetate, butyl alcohol, propylene glycol monomethyl ether, propylene glycol 1-monomethyl ether 2-acetate, toluene, and xylene are preferable. These solvents can be used alone or in combination of two or more.

The reaction temperature in the polymerization reaction may be appropriately set according to the type of the polymerization initiator and the like, and is usually 50 to 160°C, preferably 60 to 150°C. The polymerization reaction is preferably carried out in an atmosphere of an inert gas such as nitrogen gas or argon gas.

### 1-2. Rosin Ester B

The rosin ester B is a reaction product of a polyhydric alcohol (b1) and rosin or a derivative thereof (b2).

### <Polyhydric Alcohol (b1)>

The polyhydric alcohol (b1) is an organic compound having two or more alcoholic hydroxy groups in one molecule. The number of carbon atoms in the polyhydric alcohol (b1) is preferably 2 to 5, and specifically, for example, 2, 3, 4, or 5. The polyhydric alcohol (b1) is preferably a 2- to 4-hydric (dihydric, trihydric, or tetrahydric) alcohol. Therefore, the polyhydric alcohol (b1) is preferably at least one selected from 2- to 4-hydric alcohols having 2 to 5 carbon atoms.

Examples of the polyhydric alcohol (b1) include alcohols such as ethylene glycol, 1,2-propanediol, 1,3-propanediol, 1,2-butanediol, 1,3-butanediol, 2,3-butanediol, 1,4-butanediol, 1,5-pentanediol, 2,4-pentanediol, 3-methyl-1,3-butanediol, 2,2-dimethyl-1,3-propanediol, 2-methyl-1,3-propanediol, 2-methylene-1,3-propanediol, 1,1-bis(hydroxymethyl)cyclopropane, glycerin, 1,2,3-butanetriol, 1,2,4-butanetriol, 2-(hydroxymethyl)propane-1,3-diol, trimethylolethane, erythritol, pentylene glycol, and pentaerythritol, and glycerin is particularly preferable.

### <Rosin or Derivative Thereof (b2)>

Examples of the rosin include gum rosin, tall oil rosin, and wood rosin. Examples of the rosin derivative include disproportionated rosin, hydrogenated rosin, polymerized rosin, maleated rosin, and rosin esters other than the rosin ester B.

The rosin ester B is produced, for example, by an esterification reaction or a transesterification reaction between the polyhydric alcohol (b1) and rosin or a derivative thereof (b2).

Specific examples of the rosin ester B include compounds such as rosin glycerin ester, disproportionated rosin glycerin ester, hydrogenated rosin glycerin ester, rosin pentaerythritol ester, disproportionated rosin pentaerythritol ester, hydrogenated rosin pentaerythritol ester, disproportionated maleic acid rosin ester, and polymerized rosin pentaerythritol, and rosin glycerin ester, hydrogenated rosin glycerin ester, rosin pentaerythritol ester, and hydrogenated rosin pentaerythritol ester are particularly preferable. These rosin esters B can be used alone or in combination of two or more.

Commercially available products can also be used as the rosin ester B, and examples thereof include Permalyn 5095, Permalyn 5110, Foralyn 90, and Foralyn 110 (manufactured by Eastman Chemical Company).

The content of the rosin ester B in the composition of the present invention is not particularly limited, but in combination with the copolymer A, the content of the rosin ester B in the total mass of the copolymer A and the rosin ester B is preferably 5 to 90% by mass, and particularly preferably 10 to 60% by mass, particularly from the viewpoints of aesthetic appearance and coating film solubility. Specifically, this content is, for example, 5, 10, 20, 30, 40, 50, 60, 70, 80, or 90% by mass, and may be in a range between any two of the values exemplified here.

### 1-3. Antifouling Agent C

Examples of the antifouling agent C include inorganic agents and organic agents.

Examples of the inorganic agents include cuprous oxide, copper thiocyanate (common name: copper rhodane), and copper powder. Among these, cuprous oxide and copper rhodane are particularly preferable, and cuprous oxide surface-treated with glycerin, sucrose, stearic acid, lauric acid, lecithin, mineral oil, or the like is more preferable from the viewpoint of long-term stability during storage.

Examples of the organic agents include 2-mercaptopyridine-N-oxide copper (common name: copper pyrithione), 2-mercaptopyridine-N-oxide zinc (common name: zinc pyrithione), zinc ethylene bisdithiocarbamate (common name: zineb), 4,5-dichloro-2-n-octyl-3-isothiazolone (common name: Sea-Nine 211), 3,4-dichlorophenyl-N,N-dimethylurea (common name: diuron), 2-methylthio-4-t-butylamino-6-cyclopropylamino-s-triazine (common name: Irgarol 1051), 2-(p-chlorophenyl)-3-cyano-4-bromo-5-trifluoromethylpyrrole (common name: Econea 28), and 4-[1-(2,3-dimethylphenyl)ethyl]-1H-imidazole (common name: medetomidine). These antifouling agents can be used alone or in combination of two or more.

The content of the antifouling agent in the composition of the present invention is not particularly limited, but is usually preferably 0.1 to 60% by mass in terms of solid content. The content of the antifouling agent is preferably, for example, 0.1, 0.5, 1, 2, 3, 4, 5, 6, 7, 8, 9, 10, 15, 20, 25, 30, 35, 40, 45, 50, 55, or 60% by mass, and may be within a range between any two of the values exemplified here.

### Other Additives

Furthermore, the antifouling coating composition of the present invention may further include, as necessary, other resin components other than the copolymer A, an elution regulator, a plasticizer, a pigment, a dye, an anti-foaming agent, a dehydrating agent, a thixotropic agent, an organic solvent, and the like.

Examples of the other resin components include (meth)acrylic resins, polyester resins, vinyl resins, petroleum resins, metal-containing resins, zwitterionic compound-containing resins, silicone resins, and alicyclic hydrocarbon resins.

Examples of the elution regulator include rosin, hydrogenated rosin, disproportionated rosin, maleated rosin, polymerized rosin, naphthenic acid, cycloalkenylcarboxylic acid, bicycloalkenylcarboxylic acid, versatic acid, trimethylisobutenylcyclohexenecarboxylic acid, metal salts thereof, and the like, or the alicyclic hydrocarbon resins. These can be used alone or in combination of two or more.

Examples of the plasticizer include phosphate esters, phthalate esters, adipate esters, sebacate esters, epoxidized soybean oil, alkyl vinyl ether polymers, polyalkylene glycols, t-nonyl pentasulfide, petrolatum, polybutene, tris(2-ethylhexyl) trimellitate, silicone oil, chlorinated paraffin, diisononyl cyclohexane-1,2-dicarboxylate, triethyl acetylcitrate, tributyl acetylcitrate, and dipropylene glycol dibenzoate. These can be used alone or in combination of two or more.

Examples of the dehydrating agent include calcium sulfate, synthetic zeolite adsorbents, orthoesters, silicates such as tetramethoxysilane and tetraethoxysilane, isocyanates, carbodiimides, and carbodiimidazoles. These can be used alone or in combination of two or more.

### 2. Production Method of Antifouling coating composition

The antifouling coating composition of the present invention can be produced, for example, by mixing and dispersing a mixed liquid containing the copolymer A, the rosin ester B, the antifouling agent C, and other additives using a disperser. As the disperser, for example, those that can be used as a fine pulverizer can be suitably used. For example, a commercially available homomixer, sand mill, bead mill, disper, or the like can be used. Alternatively, the mixed liquid may be mixed and dispersed using a container equipped with a stirrer to which glass beads or the like for mixing and dispersing are added.

### 3. Antifouling Treatment Method, Antifouling Coating Film, and Coated Object

The antifouling treatment method of the present invention forms an antifouling coating film on the surface of an object on which a coating film is to be formed using the antifouling coating composition. According to the antifouling treatment method of the present invention, the antifouling coating film is gradually dissolved from the surface and the coating film surface is constantly renewed, whereby the attachment of aquatic fouling organisms can be prevented. Examples of the object on which a coating film is to be formed include ships (especially ship bottoms), fishing gear, and underwater structures. The thickness of the antifouling coating film may be appropriately set according to the type of the object on which a coating film is to be formed, the navigation speed of the ship, the seawater temperature, and the like. For example, when the object on which a coating film is to be formed is a ship bottom, the thickness of the antifouling coating film is usually 50 to 700 µm, preferably 100 to 600 µm.

### [EXAMPLE]

The features of the present invention will be further clarified by showing examples and the like below. However, the present invention is not limited to these examples. "%" in each Production Example, Example, and Comparative Example indicates % by mass. The weight average molecular weight (Mw) is a value determined by GPC (polystyrene equivalent). The GPC conditions are as follows:
Apparatus: HLC-8220GPC manufactured by Tosoh Corporation
Columns: Two TSKgel SuperHZM-M columns
Flow rate: 0.35 mL/min
Detector: RI
Column thermostat temperature: 40°C
Eluent: THF

The non-volatile matter content is a value measured in accordance with JIS K 5601-1-2:1999 (ISO 3251:1993) "Testing methods for paint components - Determination of non-volatile matter content."

### 1. Production Examples

### <Production Example 1 (Production of Copolymer Solution A-1)>

A four-necked flask equipped with a thermometer, a condenser, a stirrer, and a dropping funnel was charged with 32 g of xylene, introduced with nitrogen gas, and maintained at 88°C while stirring. A mixed solution of 40 g of triisopropylsilyl methacrylate, 27.5 g of 2-methoxyethyl acrylate, 32.5 g of methyl methacrylate, and 0.42 g of 1,1,3,3-tetramethylbutyl peroxy-2-ethylhexanoate was added dropwise thereto over 3 hours while maintaining at 88°C. Thereafter, the mixture was stirred at 88°C for 1 hour, and then 0.1 g of 1,1,3,3-tetramethylbutyl peroxy-2-ethylhexanoate was added twice at a 20-minute interval to complete the polymerization reaction. Then, 64 g of xylene was added and the mixture was cooled to room temperature to obtain a copolymer solution A-1. The obtained copolymer solution A-1 had a viscosity of 580 mPa·s (25°C), a non-volatile matter content of 50.8%, and a Mw of 49,000.

### <Production Examples 2 to 7 (Production of Copolymer Solutions A-2 to A-6 and Comparative Copolymer Solution R-1)>

Using the monomer mixtures shown in Table 1, the polymerization reaction was carried out in the same manner as in Production Example 1. The reaction temperature, solvent amount, and initiator amount were appropriately adjusted to obtain copolymer solutions A-2 to A-6 and comparative copolymer solution R-1 shown in Table 1. The viscosity, non-volatile matter content, and Mw of each obtained polymer solution are shown in Table 1.

**[Table 1]**

| Table 1 | | Production Example | | | | | | |
|---|---|---|---|---|---|---|---|---|
| | | 1 | 2 | 3 | 4 | 5 | 6 | 7 |
| Monomer a1 | Triisopropylsilyl methacrylate | 40.0 | 35.0 | 30.0 | 60.0 | | | |
| | Triisopropylsilyl acrylate | | | | | 35.0 | 60.0 | |
| Monomer a2 | Methyl methacrylate | 32.5 | 40.0 | 17.5 | 12.5 | 30.0 | 35.0 | 50.0 |
| | 2-Methoxyethyl methacrylate | | | 47.5 | | 10.0 | | |
| | 2-Methoxyethyl acrylate | 27.5 | 25.0 | | 27.5 | 20.0 | 5.0 | |
| | n-Butyl acrylate | | | 5.0 | | 5.0 | | 50.0 |
| Total | | 100 | 100 | 100 | 100 | 100 | 100 | 100 |
| Polymer properties | Non-volatile matter content [%] | 50.8 | 50.2 | 49.3 | 59.6 | 50.5 | 50.6 | 50.5 |
| | Weight average molecular weight [Mw] (x10⁴) | 4.9 | 4.6 | 5.2 | 2.4 | 5.1 | 5.0 | 5.0 |
| | Viscosity [mPa•s] (25°C) | 580 | 620 | 600 | 380 | 550 | 400 | 500 |
| Polymer solution name | | A-1 | A-2 | A-3 | A-4 | A-5 | A-6 | R-1 |

### <Production Example 8 (Production of Comparative Copolymer Solution R-2)>

A flask equipped with a thermometer, a reflux condenser, and a stirrer was charged with 200 g of Laroflex MP-25 (BASF) and 300 g of xylene, and stirred at 70 to 80°C for 1 hour to obtain a comparative copolymer solution R-2 (solid content: 40%).

### <Production Example 9 (Production of Rosin Ester Solution B-1)>

A flask equipped with a thermometer, a reflux condenser, and a stirrer was charged with 300 g of rosin glycerin ester and 300 g of xylene, and stirred at 70 to 80°C for 1 hour to obtain a rosin ester solution B-1 (brown transparent liquid, solid content: 50%).

### <Production Examples 10 to 12 (Production of Rosin Ester Solutions B-2 to B-3 and Z-1)>

The same operations as in Production Example 9 were carried out using the rosin esters shown in Table 2 to obtain rosin ester solutions B-2 to B-3 and Z-1. Each obtained solution is shown in Table 2.

**[Table 2]**

| Table 2 | | Production Example | | | |
|---|---|---|---|---|---|
| | | 9 | 10 | 11 | 12 |
| Rosin ester | Rosin glycerin ester | 50.0 | | | |
| | Hydrogenated rosin glycerin ester | | 50.0 | | |
| | Hydrogenated rosin pentaerythritol ester | | | 50.0 | |
| | Rosin methyl ester | | | | 50.0 |
| Solvent | Xylene | 50.0 | 50.0 | 50.0 | 50.0 |
| Total | | 100 | 100 | 100 | 100 |
| Solid content [%] | | 50.0 | 50.0 | 50.0 | 50.0 |
| Rosin ester solution name | | B-1 | B-2 | B-3 | Z-1 |

### <Production Example 13 (Production of Gum Rosin Solution)>

A flask equipped with a thermometer, a reflux condenser, and a stirrer was charged with 300 g of gum rosin produced in China (WW) and 300 g of xylene, and stirred at 70 to 80°C for 1 hour to obtain a xylene solution of gum rosin (brown transparent liquid, solid content: 50%).

### <Production Example 14 (Production of Hydrogenated Rosin Solution)>

A flask equipped with a thermometer, a reflux condenser, and a stirrer was charged with 300 g of hydrogenated rosin produced in China and 300 g of xylene, and stirred at 70 to 80°C for 1 hour to obtain a xylene solution of hydrogenated rosin (brown transparent liquid, solid content: 50%).

### 2. Examples and Comparative Examples (Production of Coating compositions)

The components shown in Tables 3 to 6 were blended in the proportions (% by mass) shown in the same tables, and mixed and dispersed with glass beads having a diameter of 2 mm to produce coating compositions.

**[Table 3]**

| Table 3 | | | Example | | | |
|---|---|---|---|---|---|---|
| | | | 1 | 2 | 3 | 4 |
| Copolymer A | Copolymer solution A-1 | | 7.5 | 7.5 | 7.5 | |
| | Copolymer solution A-2 | | | | | 7.5 |
| Rosin ester B | Rosin ester solution B-1 | | 7.5 | | | |
| | Rosin ester solution B-2 | | | 7.5 | | 7.5 |
| | Rosin ester solution B-3 | | | | 7.5 | |
| Elution regulator | Hydrogenated rosin solution | | 14.0 | 14.0 | 14.0 | 14.0 |
| Antifouling agent C | Cuprous oxide | | 30.0 | 30.0 | 30.0 | 30.0 |
| | Copper pyrithione | | 1.5 | 1.5 | 1.5 | 1.5 |
| Pigment | Zinc oxide | | 14.0 | 14.0 | 14.0 | 14.0 |
| | Titanium oxide | | 1.0 | 1.0 | 1.0 | 1.0 |
| | Red iron oxide | | 2.0 | 2.0 | 2.0 | 2.0 |
| | Talc | | 7.0 | 7.0 | 7.0 | 7.0 |
| Other additives | Ethyl silicate | | 0.5 | 0.5 | 0.5 | 0.5 |
| | Chlorinated paraffin | | 2.5 | 2.5 | 2.5 | 2.5 |
| | Disparlon A603-20X | | 0.2 | 0.2 | 0.2 | 0.2 |
| | Disparlon 4200-20 | | 0.3 | 0.3 | 0.3 | 0.3 |
| Solvent | Xylene | | 12.0 | 12.0 | 12.0 | 12.0 |
| Total | | | 100.0 | 100.0 | 100.0 | 100.0 |
| Antifouling test | Static antifouling property | After 12 months | ⊚ | ⊚ | ○ | ⊚ |
| | | After 24 months | ○ | ○ | ○ | ○ |
| Rotary test | Coating film surface state | After 12 months | ○ | ○ | ○ | ○ |
| | | After 24 months | ○ | ○ | ○ | ○ |
| | Average coating film dissolution amount (µm/month) | Initial to 6 months | 1.6 | 1.8 | 1.3 | 1.5 |
| | | 7 to 12 months | 1.7 | 1.9 | 1.3 | 1.7 |
| | | 13 to 18 months | 1.4 | 1.6 | 1.1 | 1.2 |
| | | 19 to 24 months | 1.6 | 1.7 | 1.2 | 1.3 |
| Gloss value measurement | 60° gloss value | | 23 | 25 | 24 | 23 |

**[Table 4]**

| Table 4 | | | Example | | | |
|---|---|---|---|---|---|---|
| | | | 5 | 6 | 7 | 8 |
| Copolymer A | Copolymer solution A-1 | | | | 7.5 | 15.0 |
| | Copolymer solution A-3 | | 7.5 | | | |
| | Copolymer solution A-4 | | | 6.3 | | |
| Rosin ester B | Rosin ester solution B-2 | | 7.5 | 7.5 | 7.5 | 14.0 |
| Elution regulator | Gum rosin solution | | | | 4.0 | |
| | Hydrogenated rosin solution | | 14.0 | 14.0 | 10.0 | |
| Antifouling agent C | Cuprous oxide | | 30.0 | 30.0 | 30.0 | 30.0 |
| | Copper pyrithione | | 1.5 | 1.5 | 1.5 | 1.5 |
| Pigment | Zinc oxide | | 14.0 | 14.0 | 14.0 | 14.0 |
| | Titanium oxide | | 1.0 | 1.0 | 1.0 | 1.0 |
| | Red iron oxide | | 2.0 | 2.0 | 2.0 | 2.0 |
| | Talc | | 7.0 | 7.0 | 7.0 | 7.0 |
| Other additives | Ethyl silicate | | 0.5 | 0.5 | 0.5 | 0.5 |
| | Chlorinated paraffin | | 2.5 | 2.5 | 2.5 | 2.5 |
| | Disparlon A603-20X | | 0.2 | 0.2 | 0.2 | 0.2 |
| | Disparlon 4200-20 | | 0.3 | 0.3 | 0.3 | 0.3 |
| Solvent | Xylene | | 12.0 | 13.2 | 12.0 | 12.0 |
| Total | | | 100.0 | 100.0 | 100.0 | 100.0 |
| Antifouling test | Static antifouling property | After 12 months | ⊚ | ⊚ | ⊚ | ○ |
| | | After 24 months | ○ | ○ | ○ | Δ |
| Rotary test | Coating film surface state | After 12 months | ○ | ○ | ○ | ○ |
| | | After 24 months | ○ | ○ | ○ | ○ |
| | Average coating film dissolution amount (µm/month) | Initial to 6 months | 1.4 | 1.5 | 2.0 | 1.4 |
| | | 7 to 12 months | 1.3 | 1.3 | 1.9 | 1.1 |
| | | 13 to 18 months | 1.5 | 1.0 | 1.6 | 0.9 |
| | | 19 to 24 months | 1.3 | 1.2 | 1.9 | 1.0 |
| Gloss value measurement | 60° gloss value | | 21 | 23 | 24 | 25 |

**[Table 5]**

| Table 5 | | | Example | | | | | |
|---|---|---|---|---|---|---|---|---|
| | | | 9 | 10 | 11 | 12 | 13 | 14 |
| Copolymer A | Copolymer solution A-1 | | 10.0 | | | | | |
| | Copolymer solution A-3 | | | | | 7.5 | | |
| | Copolymer solution A-4 | | | | | | 6.3 | |
| | Copolymer solution A-5 | | | 7.5 | | | | 7.5 |
| | Copolymer solution A-6 | | | | 7.5 | | | |
| Rosin ester B | Rosin ester solution B-2 | | 10.0 | 7.5 | 7.5 | 7.5 | 7.5 | 7.5 |
| Elution regulator | Gum rosin solution | | 4.5 | 14.0 | | | 7.0 | 14.0 |
| | Hydrogenated rosin solution | | 4.5 | | 14.0 | 14.0 | 7.0 | |
| Antifouling agent C | Cuprous oxide | | 30.0 | 30.0 | 30.0 | 28.0 | 28.0 | 30.0 |
| | Copper pyrithione | | 1.5 | 1.5 | 1.5 | 1.0 | 1.0 | 1.0 |
| | Zineb | | | | | 4.0 | | |
| | Sea Nine | | | | | | 3.0 | |
| | Medetomidine | | | | | | | 0.1 |
| Pigment | Zinc oxide | | 14.0 | 14.0 | 14.0 | 14.0 | 14.0 | 14.0 |
| | Titanium oxide | | 1.0 | 1.0 | 1.0 | 1.0 | 1.0 | 1.0 |
| | Red iron oxide | | 2.0 | 2.0 | 2.0 | 2.0 | 2.0 | 2.0 |
| | Talc | | 7.0 | 7.0 | 7.0 | 7.0 | 7.0 | 7.0 |
| Other additives | Ethyl silicate | | 0.5 | 0.5 | 0.5 | 0.5 | 0.5 | 0.5 |
| | Diisononyl cyclohexane-1,2-dicarboxylate | | 2.5 | | | 2.5 | | |
| | Triethyl acetylcitrate | | | 2.5 | | | 2.5 | |
| | Dipropylene glycol dibenzoate | | | | 2.5 | | | 2.5 |
| | Disparlon A603-20X | | 0.2 | 0.2 | 0.2 | 0.2 | 0.2 | 0.2 |
| | Disparlon 4200-20 | | 0.3 | 0.3 | 0.3 | 0.3 | 0.3 | 0.3 |
| Solvent | Xylene | | 12.0 | 12.0 | 12.0 | 10.5 | 12.7 | 12.4 |
| Total | | | 100.0 | 100.0 | 100.0 | 100.0 | 100.0 | 100.0 |
| **Antifouling** test | Static antifouling property | After 12 months | ⊚ | ⊚ | ⊚ | ⊚ | ⊚ | ⊚ |
| | | After 24 months | ○ | ○ | ○ | ○ | ○ | ○ |
| Rotary test | Coating film surface state | After 12 months | ○ | ○ | ○ | ○ | ○ | ○ |
| | | After 24 months | ○ | ○ | ○ | ○ | ○ | ○ |
| | Average coating film dissolution amount (µm/month) | Initial to 6 months | 1.4 | 1.4 | 1.2 | 1.4 | 1.3 | 1.5 |
| | | 7 to 12 months | 1.1 | 1.3 | 1.1 | 1.4 | 1.4 | 1.4 |
| | | 13 to 18 months | 0.9 | 1.4 | 0.9 | 1.5 | 1.2 | 1.5 |
| | | 19 to 24 months | 1.0 | 1.2 | 1.0 | 1.3 | 1.3 | 1.3 |
| Gloss value measurement | 60° gloss value | | 22 | 25 | 24 | 22 | 23 | 26 |

**[Table 6]**

| Table 6 | | | Comparative Example | | | | | | |
|---|---|---|---|---|---|---|---|---|---|
| | | | 1 | 2 | 3 | 4 | 5 | 6 | 7 |
| Copolymer A | Copolymer solution A-1 | | 15.0 | | | | | | 7.5 |
| | Copolymer solution A-2 | | | 15.0 | | | | | |
| | Copolymer solution A-3 | | | | 15.0 | | | | |
| | Copolymer solution A-4 | | | | | 12.5 | | | |
| Other copolymer | Copolymer solution R-1 | | | | | | 7.5 | | |
| | Copolymer solution R-2 | | | | | | | 9.4 | |
| Rosin ester B | Rosin ester solution B-2 | | | | | | 7.5 | 7.5 | |
| Other rosin ester | Rosin ester solution Z-1 | | | | | | | | 7.5 |
| Elution regulator | Hydrogenated rosin solution | | 14.0 | 14.0 | 14.0 | 14.0 | 14.0 | 14.0 | 14.0 |
| Antifouling agent C | Cuprous oxide | | 30.0 | 30.0 | 30.0 | 30.0 | 30.0 | 30.0 | 30.0 |
| | Copper pyrithione | | 1.5 | 1.5 | 1.5 | 1.5 | 1.5 | 1.5 | 1.5 |
| Pigment | Zinc oxide | | 14.0 | 14.0 | 14.0 | 14.0 | 14.0 | 14.0 | 14.0 |
| | Titanium oxide | | 1.0 | 1.0 | 1.0 | 1.0 | 1.0 | 1.0 | 1.0 |
| | Red iron oxide | | 2.0 | 2.0 | 2.0 | 2.0 | 2.0 | 2.0 | 2.0 |
| | Talc | | 7.0 | 7.0 | 7.0 | 7.0 | 7.0 | 7.0 | 7.0 |
| Other additives | Ethyl silicate | | 0.5 | 0.5 | 0.5 | 0.5 | 0.5 | 0.5 | 0.5 |
| | Chlorinated paraffin | | 2.5 | 2.5 | 2.5 | 2.5 | 2.5 | 2.5 | 2.5 |
| | Disparlon A603-20X | | 0.2 | 0.2 | 0.2 | 0.2 | 0.2 | 0.2 | 0.2 |
| | Disparlon 4200-20 | | 0.3 | 0.3 | 0.3 | 0.3 | 0.3 | 0.3 | 0.3 |
| Solvent | Xylene | | 12.0 | 12.0 | 12.0 | 14.5 | 12.0 | 10.1 | 12.0 |
| Total | | | 100.0 | 100.0 | 100.0 | 100.0 | 100.0 | 100.0 | 100.0 |
| Antifouling test | Static antifouling property | After 12 months | ○ | ○ | ○ | ○ | Δ | ○ | ○ |
| | | After 24 months | Δ | Δ | Δ | ○ | × | Δ | × |
| Rotary test | Coating film surface state | After 12 months | ○ | ○ | ○ | ○ | ○ | × × | ○ |
| | | After 24 months | × | × | × | × | × | × × | × |
| | Average coating film dissolution amount (µm/month) | Initial to 6 months | 3.0 | 3.4 | 3.2 | 3.7 | 2.5 | 3.5 | 2.3 |
| | | 7 to 12 months | 3.2 | 3.2 | 2.9 | 3.4 | 0.3 | 0.2 | 1.5 |
| | | 13 to 18 months | 3.4 | 3.1 | 2.8 | 3.8 | 0.2 | 0.0 | 1.1 |
| | | 19 to 24 months | 2.6 | 2.7 | 2.4 | 3.6 | 0.2 | 0.2 | 0.6 |
| Gloss value measurement | 60° gloss value | | 5 | 4 | 6 | 8 | 3 | 17 | 22 |

Details of the components in Tables 2 to 6 are as follows.

### <Rosin Ester B>

Rosin glycerin ester: Trade name "Permalyn 5095" (manufactured by Eastman Chemical Company)
Hydrogenated rosin glycerin ester: Trade name "Foralyn 90" (manufactured by Eastman Chemical Company)
Hydrogenated rosin pentaerythritol ester: Trade name "Foralyn 110" (manufactured by Eastman Chemical Company)
Rosin methyl ester: Trade name "Metalyn 200" (manufactured by Eastman Chemical Company)

### <Elution Regulator>

Gum rosin solution: The one produced in Production Example 13 was used.

Hydrogenated rosin solution: The one produced in Production Example 14 was used.

### <Antifouling Agent C>

Cuprous oxide: Trade name "NC-301" (manufactured by Nissin Chemco, Ltd.)
Copper pyrithione: Trade name "Copper Omadine" (manufactured by LONZA Inc.)
Zineb: Zinc [ethylenebis(dithiocarbamate)] (manufactured by Ouchi Shinko Chemical Industrial Co., Ltd.)
Sea Nine: Trade name "Sea-Nine 211", 4,5-dichloro-2-octyl-4-isothiazolin-3-one (manufactured by R&H Co.), xylene solution containing 30% active ingredient
Medetomidine: (±)-4-[1-(2,3-dimethylphenyl)ethyl]-1H-imidazole (manufactured by Wako Pure Chemical Industries, Ltd.)

### <Pigments and Other Additives>

Zinc oxide: Trade name "Zinc Oxide Type 2" (manufactured by Seido Chemical Industry Co., Ltd.)
Titanium oxide: Trade name "FR-41" (manufactured by Furukawa Co., Ltd.)
Red iron oxide: Trade name "Bengara Kingyoku" (manufactured by Morishita Bengara Kogyo Co., Ltd.)
Talc: Trade name "Talc MS" (manufactured by Nippon Talc Co., Ltd.)
Ethyl silicate: Trade name "Ethyl Silicate 28" (manufactured by Colcoat Co., Ltd.)
Chlorinated paraffin: Trade name "Cereclor 42" (manufactured by INEOS)
Diisononyl cyclohexane-1,2-dicarboxylate: Trade name "HEXAMOLL (registered trademark) DINCH (registered trademark)" (manufactured by BASF)
Triethyl acetylcitrate: manufactured by Tokyo Chemical Industry Co., Ltd.
Dipropylene glycol dibenzoate: manufactured by FUJIFILM Wako Pure Chemical Corporation
Disparlon A603-20X: Amide-based thixotropic agent: Trade name "Disparlon A603-20X" (manufactured by Kusumoto Chemicals, Ltd.)
Disparlon 4200-20: Polyethylene oxide-based thixotropic agent: Trade name "Disparlon 4200-20" (manufactured by Kusumoto Chemicals, Ltd.)

### <Test Example 1 (Antifouling Test)>

The coating compositions obtained in the Examples and Comparative Examples were applied to both sides of a rigid PVC plate (100 × 200 × 2 mm) so that the dry coating film had a thickness of about 300 µm. The obtained coated product was dried at room temperature (25°C) for 3 days to prepare a test plate having a dry coating film with a thickness of about 300 µm. This test plate was immersed 1.5 m below sea level in Owase City, Mie Prefecture, and the fouling of the test plate by attachments was observed after 12 months and 24 months.

Evaluation was performed by visual observation of the state of the coating film surface, and judged according to the following criteria.
⊚ (Excellent): No fouling organisms such as shellfish and algae are attached, and there is almost no slime.
○ (Good): No fouling organisms such as shellfish and algae are attached, and although slime is attached thinly (to the extent that the coating film surface can be seen), it is at a level that can be removed by wiping lightly with a brush.
△ (Fair): No fouling organisms such as shellfish and algae are attached, but slime is attached so thickly that the coating film surface cannot be seen, and it is at a level that cannot be removed even by wiping strongly with a brush.
× (Poor): A level where fouling organisms such as shellfish and algae are attached.

### <Test Example 2 (Rotary Test)>

A rotating drum with a diameter of 515 mm and a height of 440 mm was installed in the center of a water tank and made rotatable by a motor. In addition, a cooling device for keeping the seawater temperature constant and a pH automatic controller for keeping the seawater pH constant were installed.

A test plate was prepared according to the following method.

First, an anticorrosive paint (epoxy vinyl A/C) was applied onto a titanium plate (71 × 100 × 0.5 mm) so that the thickness after drying became about 100 µm and dried to form an anticorrosive coating film. Thereafter, the coating compositions obtained in the Examples and Comparative Examples were applied so that the dry film thickness became about 400 µm, and dried at 40°C for 3 days to prepare test plates.

The prepared test plate was fixed to the rotating drum of the rotating device of the above apparatus so as to be in contact with seawater, and the rotating drum was rotated at a speed of 20 knots. During that time, the seawater temperature was maintained at 25°C and the pH at 8.0 to 8.2, and the seawater was replaced every two weeks.

The remaining film thickness of each test plate at the initial stage and every 6 months after the start of the test was measured with a one-shot 3D shape measuring machine VR-5000 (manufactured by Keyence Corporation), and the average coating film dissolution amount per month (µm/month) was obtained by calculating the dissolved coating film thickness from the difference.

In addition, when measuring the remaining film thickness after 12 months and 24 months of the rotary test, the surface state of each coating film was evaluated by observing each coating film surface with the naked eye and a microscope. Evaluation of the coating film surface state was performed according to the following criteria.
○ (Good): No abnormality at all.
△ (Fair): Hair cracks are partially observed on the coating film surface.
× (Poor): Hair cracks are observed all over the coating film surface.
×× (Very Poor): Cracks are observed on the coating film surface.

### <Test Example 3 (Gloss Value Measurement)>

The coating compositions obtained in the Examples and Comparative Examples were applied to one side of a frosted glass plate (100 × 200 × 1 mm) so that the dry coating film had a thickness of about 200 µm. The obtained coated product was dried at 40°C for 1 day to prepare a test plate having a dry coating film with a thickness of about 200 µm.

The 60-degree gloss value of the dry coating film surface was measured with a micro-TRI-gloss (gloss meter manufactured by BYK Gardner). In general, the higher the gloss value, the higher the gloss of the coating film surface and the better the aesthetic appearance. Therefore, in this test as well, a coating film showing a high gloss value was evaluated as preferable.

### <Test Result>

From the results of Test Examples 1 to 3, it was found that the coating films of the Examples formed using the composition containing the copolymer A and the rosin ester B showed higher gloss values than the coating films of the Comparative Examples not containing at least one of the copolymer A and the rosin ester B, exhibited good antifouling performance despite the relatively small coating film dissolution amount, and did not cause coating film abnormalities such as cracks even after being immersed in seawater for a long period of time.

## Claims

1. An antifouling coating composition comprising a copolymer A, a rosin ester B, and an antifouling agent C, wherein the copolymer A is a copolymer of a monomer (a1) and an ethylenically unsaturated monomer (a2) other than the monomer (a1), the monomer (a1) is represented by a general formula (1), and the rosin ester B is a reaction product of a polyhydric alcohol (b1) and rosin or a derivative thereof (b2); 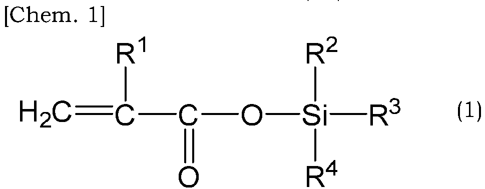 in the formula, R¹ represents a hydrogen atom or a methyl group, and R² to R⁴ are the same or different and each represents a branched alkyl group having 3 to 8 carbon atoms or a phenyl group.

2. The antifouling coating composition according to claim 1, wherein a content of the rosin ester B is 5 to 90% by mass based on the total mass of the copolymer A and the rosin ester B.

3. The antifouling coating composition according to claim 1 or 2, wherein the polyhydric alcohol (b1) is at least one selected from 2- to 4-hydric alcohols having 2 to 5 carbon atoms.
